# EUROPEAN PATENT APPLICATION

(11) **EP 2 620 972 A1**
(43) Date of publication of application: **31.07.2013**
(21) Application number: 10857447.6
(22) Date of filing: 26.09.2010
(51) Int. Cl.: H01J 29/10, H01J 31/10, H01J 31/20

(54) **FIELD EMISSION ANODE PLATE, FILED EMISSION LIGHT SOURCE AND MANUFACTURING METHOD FOR LIGHT SOURCE**

(71) Applicant: OCEAN'S KING LIGHTING SCIENCE & TECHNOLOGY CO., LTD., Guangdong 518054 (CN)
(72) Inventor: ZHOU, Mingjie, Guangdong 518054 (CN); MA, Wenbo, Guangdong 518054 (CN); LI, Qingtao, Guangdong 518054 (CN)
(74) Representative: Brunetti, Fabrizio
(86) International application number: PCT/CN2010/077312
(87) International publication number: WO 2012/037733

(57) **Abstract**

A field emission anode plate (1), a filed emission light source and a manufacturing method for the light source are provided. The field emission anode plate comprises a transparent ceramic base (10) and an anode conductive layer (11) provided on the surface of the transparent ceramic base which can be excited to produce light by cathode rays. The filed emission light source comprises the field emission anode plate, a field emission cathode plate (2) and a supporter (3). The field emission cathode plate comprises a substrate (20) and a cathode conductive layer (21) provided on the surface of the substrate. The anode conductive layer and the cathode conductive layer are arranged opposite to each other, and two ends of the supporter are hermetically connected to the field emission anode plate and the field emission cathode plate respectively, thus the field emission anode plate, the field emission cathode plate and the supporter constitute a vacuum chamber. As the transparency and electron-impact resistance are improved and the corrosion and wear resistance properties are increased, the field emission anode plate is low-cost with luminance uniformity, and the filed emission light source also exhibits high luminance intensity, luminance uniformity and a long service life.

## Description

### Technical Field

The present invention belongs to the technical field of electric light source, and particularly relates to a field emission anode plate, a field emission light source and a method for preparing the same.

### Background

Electric light sources have long been a research hotspot all over the world, and occupy a very important position in the world economy. At present, a widely used light source is gas-discharge light source, and the mechanism thereof comprises evacuating the light bulb and charging it with mixed gases containing mercury so that the discharge of gases leads to light emission or UV lights produced by the discharge of gases excite the fluorescent powder to emit lights. However, the pulsed light emitted by the gas-discharge light source readily leads to visual fatigue. In addition, mercury pollutes the environment. Along with the progress of the society and science and technology, it has become an important research topic to develop a clean light source which is energy efficient and environment friendly to replace conventional light sources.

Field emission light source is one type of newly developed electric light source, and has the advantages of high current density, low power consumption, and quick response, and therefore has an important application prospect in vacuum electronic fields such as flat-panel display, X ray source, microwave amplifier, etc. The mechanism thereof comprises that an electron emitter, such as a tip of a metal, carbon nanotubes, etc., at a positions having a low potential emits electrons under the effect of an electric field to bombard a fluorophor at a position having a high potential to render it emitting visible lights.

Currently, field emission devices are mainly used in illumination and display fields, and have advantages such as low working voltage, void of preheating delay, high integration, energy saving, environment friendliness, quick start-up, low weight and thickness and good environment adaptability. As a new-generation light source in the illumination field, field emission devices have the advantages of void of mercury, low energy consumption, homogeneous luminescence and adjustable light intensity, and therefore have become the interest of more and more researchers in the illumination field and received rapid progress in the illumination industry. Currently used field emission devices mainly use a fluorescent powder as the anode, wherein electrons bombard the fluorescent powder to render it emitting visible lights under the excitation of the electron beam. Normally, in field emission devices comprising a fluorescent powder, a fluorescent powder of sulfide, oxide or silicate type may be selected as the anode luminescent material. An oxide or silicate type of fluorescent powder has relatively low conductivity, and electric charges would readily accumulate at the anode under the bombardment of the electron beam, which leads to decrease of the electric potential difference between the two electrodes and affects the luminescent efficiency of the device. For an anode plates made from a sulfide fluorescent powder which has relatively better conductivity, the sulfide would readily decompose to release gases under long time excitation of electron beam, which not only decreases the vacuum degree of the device, but also "poisons" the cathode, which finally reduces the service life of the device. In addition, when using powders as the field emission anode, the powders may peel off under the bombardment of the electron beam, which leads to the masking of the cathode of the device and heterogeneous luminescence of the anode, and reduces the service life of the device.

### Summary

The objectives of the present invention are to overcome the above shortcomings in the prior art and to provide a field emission anode plate having good conductivity, high light-transmittance, and stable resistance to the impact of electrons.

In addition, it is provided a field emission light source comprising the above field emission anode plate.

The present invention also provides a method for preparing the above field emission light source.

In order to achieve the above objectives, the technical solutions of the present invention are as follows.

A field emission anode plate comprises a transparent ceramic base and an anode conductive layer provided on a surface of the transparent ceramic base, and the transparent ceramic base emits light under excitation of cathode rays.

In addition, a field emission light source comprises a field emission anode plate, a field emission cathode plate and a supporter, wherein the field emission anode plate is the above component; the field emission cathode plate comprises a substrate and a cathode conductive layer provided on a surface of the substrate; the anode conductive layer and the cathode conductive layer are arranged opposing each other; two ends of the supporter are hermetically connected to the field emission anode plate and the field emission cathode plate, respectively; and the supporter, the field emission anode plate and the field emission cathode plate form a vacuum chamber.

A method for preparing the above field emission light source comprises the steps of: preparing a field emission anode plate, a field emission cathode plate and an insulating supporter, wherein the field emission anode plate comprises a transparent ceramic base and an anode conductive layer provided on a surface of the transparent ceramic base, wherein the transparent ceramic base emits light under excitation of cathode rays; and the field emission cathode plate comprises a substrate and a cathode conductive layer provided on a surface of the substrate;
arranging the anode conductive layer of the field emission anode plate and the cathode conductive layer of the field emission cathode plate opposing each other; and connecting two ends of the insulating supporter to the field emission anode plate and the field emission cathode plate, respectively, so that the supporter, the field emission anode plate and the field emission cathode plate form a vacuum chamber; and
arranging an exhaust port at the chamber, applying low-melting-point glass solder at a joint of the insulating supporter, the field emission anode plate and the field emission cathode plate, heating to seal, exhausting the chamber, and sealing the exhausting port to obtain the field emission light source.

The field emission anode plate of the present invention employs a transparent ceramic which may emit light under the excitation of cathode rays as a base. This transparent ceramic base effectively increases the light-transmittance and resistance to the impact of electrons of the field emission anode plate, improves the stability, corrosion resistance and abrasive resistance of this anode plate. In addition, the field emission anode plate emits light homogeneously and has a low cost. The field emission light source made from the field emission anode plate shows high luminescent intensity, homogeneous luminescence, stable luminescent performance, corrosion resistance, abrasive resistance, and long service life. The method for preparing the field emission light source is simple with high production efficiency and low cost and is suitable for industrial production.

### Brief Description of the Figures

Figure 1 shows a scheme of a structure of the field emission anode plate of the present invention;
Figure 2 show a scheme of a structure of the field emission light source of the present invention;
Figure 3 shows a scheme of another structure of the field emission light source of the present invention; and
Figure 4 shows a schematic flow chart of the method for preparing the field emission light source of the present invention.

### Specific Embodiments

In order to make the objectives, the technical solutions and the advantages of the present invention more obvious, the present invention will be further described in detail in combination with the Figures and the embodiments. It shall be understood that the specific embodiments described herein are only to illustrate rather than to limit the present invention.

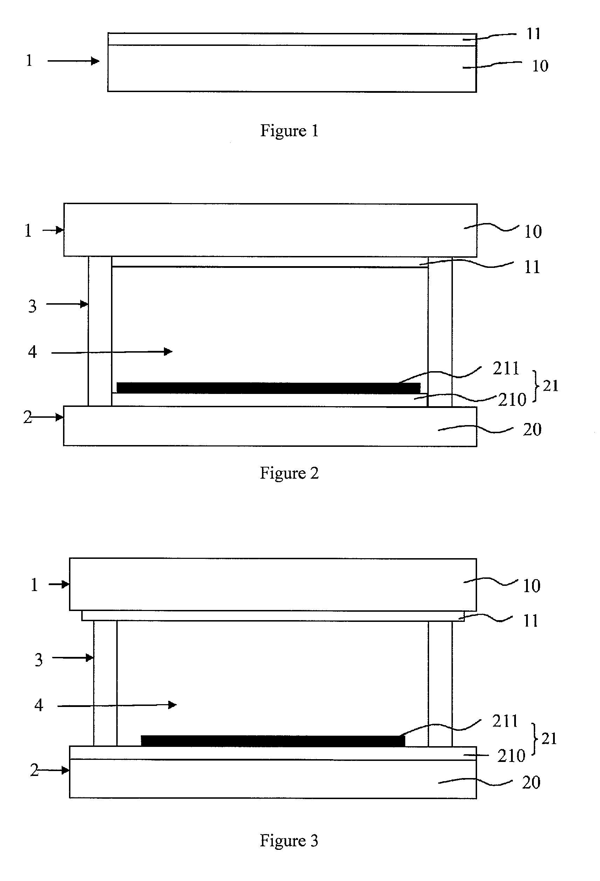

An embodiment of the present invention provides a field emission anode plate 1 which has good conductivity, high light-transmittance, and stable resistance to the impact of electrons. As shown in Figure 1, it comprises a transparent ceramic base 10, and an anode conductive layer 11 provided on a surface of the transparent ceramic base 10, and the transparent ceramic base 10 emits light under excitation of cathode rays. Thus, the field emission anode plate 1 employs a transparent ceramic which may emit light under the excitation of cathode rays as a base, which effectively increases the light-transmittance and resistance to the impact of electrons of the field emission anode plate 1. In addition, the transparent ceramic base improves the stability, corrosion resistance and abrasive resistance of the anode plate 1, so that the field emission anode plate 1 emits light homogeneously and has a low cost.

Specifically, the material of the transparent ceramic base 10 in the above embodiment is preferably one of Y₂O₃:Eu transparent ceramic, Y₂O₂S:Eu transparent ceramic, Y₂SiO₅:T transparent ceramic, Gd₂O₂S:Tb transparent ceramic, LaAlO₃:Tm transparent ceramic and LaGaO₃:Tm transparent ceramic. The transparent ceramics with this kind of materials have high light-transmittance, high stability, and good resistance to the impact of electrons, and have good corrosion resistance and good abrasive resistance.

Furthermore, the transparent ceramic base 10 of this embodiment has a thickness of preferably 0.5-30 mm. The transparent ceramic base 10 with such a thickness has an effective crush resistance and mechanical resistance. When the thickness increases, the crush resistance and mechanical resistance would increase accordingly; however, too high a thickness would impair the appearance of the transparent ceramic base 10, increase the weight thereof as well as the production cost thereof. The anode conductive layer 11 has a thickness of preferably 10 nm - 300 µm, and the material thereof is preferably metal aluminum, silver, magnesium, copper or gold. The thickness of the anode conductive layer 11 determines the electron-penetrating efficiency, the surface resistance of the conductive layer, as well as the luminescent efficiency of the field emission light source. When the thickness of the anode conductive layer 11 increases, the surface resistance would decrease accordingly, but the electron-penetrating efficiency as well as the luminescent efficiency of the field emission light source would also decrease. If the thickness is too high, electrons cannot penetrate, leading to decrease of the luminescent efficiency of the field emission light source. Accordingly, the above thickness of the anode conductive layer 11 may effectively balance the surface resistance and the electron-penetrating efficiency of the field emission anode plate 1, and optimize the performance of the field emission anode plate 1. The above materials of the anode conductive layer 11 have superior electron-penetrating efficiency, so that the luminescent efficiency of the field emission light source is increased.

An embodiment of the present invention also provides a field emission light source made from the above field emission anode plate 1. As shown in Figures 2 and 3, the field emission light source comprises a field emission anode plate 1, a field emission cathode plate 2 and a supporter 3, wherein the field emission anode plate 1 comprises a transparent ceramic base 10 and an anode conductive layer 11 provided on a surface thereof, and the transparent ceramic base 10 emits light under excitation of cathode rays; the field emission cathode plate 2 comprises a substrate 20 and a cathode conductive layer 21 provided at the substrate 20; two ends of the supporter 3 are hermetically connected to the field emission anode plate 1 and the field emission cathode plate 2, respectively; the supporter 3, the field emission anode plate 1 and the field emission cathode plate 2 form a vacuum chamber 4; and the anode conductive layer 11 of the field emission anode plate 1 and the cathode conductive layer 21 of the field emission cathode plate 2 are arranged opposing each other. Thus, the outer surface of the anode conductive layer 11 and the outer surface of the cathode conductive layer 21 are both in the vacuum chamber 4, and the field emission light source comprises the above field emission anode plate 1, resulting in high luminescent intensity, homogeneous luminescent, stable luminescent performance, corrosion resistance, abrasive resistance, and long service life.

Specifically, in the above embodiment of the field emission light source, the distance between the field emission anode plate 1 and the field emission cathode plate 2 is preferably 200 µm - 3 cm. The range of the distance can effectively ensure that electrons penetrate the anode conductive layer 11 of the field emission anode plate 1, and increase the luminescent efficiency of the field emission light source.

Furthermore, the substrate 20 of the above field emission cathode plate 2 comprises a surface body 201, which is arranged opposing the above anode conductive layer 11. On the surface body 201 is provided the cathode conductive layer 21. The thickness of the substrate 20 is preferably 0.5-30 mm. The substrate 20 ensures the crush resistance and mechanical resistance of the field emission cathode plate 2, and provides a supportive body for the cathode conductive layer 21. The cathode conductive layer 21 of the field emission cathode plate 2 comprises a conductive layer 210 provided on the surface body 201 and a cathode layer 211 provided on the outer surface of the conductive layer 210. The conductive layer 210 functions mainly for conducting, and has a resistance of preferably above 0 ohm and less than or equal to 7 ohm. The cathode 211 functions as an electron emitter, and provides a stable electron flow oriented to the anode conductive layer 11. Of course, the substrate 20 may also be provided with multiple surface bodies. Two ends of the above supporter 3 are hermetically connected to the field emission anode plate 1 and the field emission cathode plate 2, respectively, in the following ways.

The first way: referring to Figure 2, two ends of the supporter 3 are hermetically connected to the transparent ceramic base 10 outer surface of the field emission anode plate 1 and the substrate 20 outer surface of the field emission cathode plate 2, respectively, and the anode conductive layer 11 and the cathode conductive layer 21 are both in the vacuum chamber 4. This way is preferred in the present embodiment, in which the performance of the field emission cathode plate 2 is achieved equivalently while the production cost is further decreased and the safety performance of the field emission light source is improved.

The second way: referring to Figure 3, two ends of the supporter 3 are hermetically connected to the anode conductive layer 11 outer surface of the field emission anode plate 1 and the cathode conductive layer 21 outer surface of the field emission cathode plate 2, respectively, and the cathode layer 211 of the cathode conductive layer 21 is in the vacuum chamber 4.

The third way (not shown): two ends of the supporter 3 are hermetically connected to the transparent ceramic base 10 outer surface of the field emission anode plate 1 and the cathode conductive layer 21 outer surface of the field emission cathode plate 2, respectively, and the anode conductive layer 11 and the cathode layer 211 are both in the vacuum chamber 4. Alternatively, two ends of the supporter 3 are hermetically connected to the anode conductive layer 11 outer surface of the field emission anode plate 1 and the substrate 20 outer surface of the field emission cathode plate 2, respectively, and the cathode conductive layer 21 is in the vacuum chamber 4.

Specifically, the above conductive layer 210 is preferably one of tin indium oxide layer, silver layer, metallic aluminum layer, gold layer and chromium layer, and its thickness is preferably 100 µm - 250 nm. The cathode layer 211 is preferably one of carbon nanotube layer, zinc oxide nanowire layer and cupric oxide nanowire layer, and its thickness is preferably 0.5-30 µm.

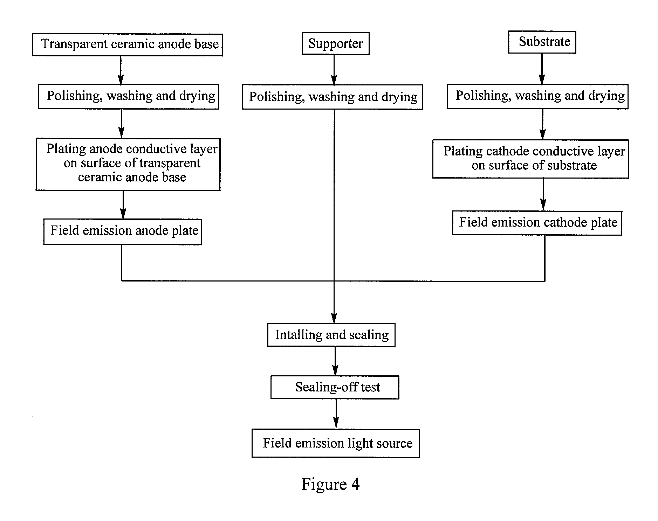

An embodiment of the present invention further provides a method for preparing the above field emission light source, and the flow chart of the method is shown in Figure 4. The method comprises the steps of:
S1. providing a field emission anode plate 1 (see Figure 1), a field emission cathode plate 2 and an insulating supporter 3 (see Figure 2), wherein the field emission anode plate 1 comprises a transparent ceramic base 10 and an anode conductive layer 11 provided on the transparent ceramic base 10, and the transparent ceramic base emits light under excitation of cathode rays; and the field emission cathode plate 2 comprises a substrate 20 and a cathode conductive layer 21 provided on a surface of the substrate 20;
S2. arranging the anode conductive layer 11 of the field emission anode plate 1 and the cathode conductive layer 21 of the field emission cathode plate 2 opposing each other; and connecting two ends of the insulating supporter 3 to the field emission anode plate 1 and the field emission cathode plate 2, respectively, so that the supporter 3, the field emission anode plate 1 and the field emission cathode plate 2 form a vacuum chamber 4; and
S3. arranging an exhaust port (not shown in the Figures) at the chamber 4, applying low-melting-point glass solder at a joint of the insulating supporter 3, the field emission anode plate 1 and the field emission cathode plate 2, heating to seal, exhausting the chamber 4, and sealing the exhausting port to obtain the field emission light source.

Specifically, in step S1 of the above method for preparing the field emission light source, the materials and the thicknesses of the transparent ceramic base 10, the anode conductive layer 11, the substrate 20 and the cathode conductive layer 21 are the same as described above, and will not be repeated for conciseness. The insulating supporter 3 is preferably washed in advance, for example with acetone, ethanol and de-ionized water. The processes for obtaining the field emission anode plate 1 and the field emission cathode plate 2 are as follows.

The field emission anode plate 1: providing a transparent ceramic base 10 (see Figure 1), polishing, washing and drying the transparent ceramic base 10, and plating a surface of the transparent ceramic base 10 with an anode conductive layer 11 to give the anode plate 1.

The field emission cathode plate 2: providing a substrate 20 (see Figures 2 and 3), polishing, washing and drying the substrate 20, and plating a surface of the substrate 20 in sequence with a conductive layer 210 and a cathode layer 211.

In the above processes for obtaining the field emission anode plate 1 and the field emission cathode plate 2, the transparent ceramic base 10 and the substrate 20 are preferably washed with acetone, ethanol and de-ionized water, or the like; and may be dried by air-drying, oven-drying, or the like. The method for plating the surface of the transparent ceramic base 10 of the field emission anode plate 1 with the anode conductive layer 11 is preferably an evaporation method, a magnetron sputtering method, or the like. The material for the substrate 20 of the field emission cathode plate 2 may be any one commonly used in the art. The conductive layer 210, such as tin indium oxide layer, silver layer, metallic aluminum layer, gold layer or chromium layer, may be plated on the surface of the substrate 20 by an evaporation method or a magnetron sputtering method, and the method for plating the outer surface of the conductive layer 210 with the cathode layer 211, such as carbon nanotube layer, zinc oxide nanowire layer or cupric oxide nanowire layer, may be a printing method or a growing method.

Specifically, in step S2 of the above method for preparing the field emission light source, the ways in which two ends of the supporter 3 are hermetically connected to the field emission anode plate 1 and the field emission cathode plate 2 are described above and will not be repeated for conciseness.

Specifically, in step S3 of the above method for preparing the field emission light source, the temperature of heating to seal is preferably 380-550°C, and the time thereof may be 5-90 min. The above temperature and time may effectively ensure melting the low-melting-point glass solder and sealing of the joint of the insulating supporter 3, the field emission anode plate 1 and the field emission cathode plate 2. Exhausting the chamber 4 in this step is carried out through the exhaust port connected to the chamber 4. There may be two ways for arranging the exhaust port: 1) erectly arranging an exhaust tube on a small hole at a corner of the field emission cathode plate 2, sealing the joint and heating to seal the exhaust tube; 2) arranging an exhaust tube in a gap of the supporter 3 between the field emission anode plate 1 and the field emission anode plate 2, sealing the joint and heating to seal the exhaust tube. The pressure after exhaustion is preferably 1×10⁻⁵ ∼ 9.9×10⁻⁵¬. In order to obtain a relative high vacuum in the vacuum chamber 4, exhausting is preferably conducted by an exhausting station. In order to obtain a relative good vacuum chamber 4, a getter is preferably placed in the exhausting tube during exhausting.

The above method for preparing the field emission light source only requires sealing the relevant components as required and exhausting to obtain the final product. The process is simple, thereby increasing the production efficiency and decreasing the production cost, which is suitable for industrial production.

The present invention will be further described in detail in combination with specific examples.

### Example 1

A red-light-emitting field emission light source has a structure as shown in Figure 2. The field emission light source comprises a field emission anode plate 1, a field emission cathode plate 2 and a supporter 3. The field emission anode plate 1 comprises a Y₂O₃:Eu transparent ceramic base 10 having a thickness of 0.5 mm, on a surface thereof being provided an aluminum film anode conductive layer 11 having a thickness of 10 nm. The field emission cathode plate 2 comprises a substrate 20 having a thickness of 0.5 mm and a cathode conductive layer 21 provided on a surface body 201 of the substrate 20. The cathode conductive layer 21 comprises an ITO film conductive layer 210 having a thickness of 250 nm and a CNTs film cathode layer 211 having a thickness of 0.5 µm, which are sequentially provided on the surface body 201. Two ends of the supporter 3 are hermetically connected to the transparent ceramic base 10 outer surface of the field emission anode plate 1 and a surface body 201 of the substrate 20 of the field emission cathode plate 2, respectively, and the supporter 3, the field emission anode plate 1 and the field emission cathode plate 2 together form a vacuum chamber 4, wherein the aluminum film anode conductive layer 11, the ITO film conductive layer 210 and the CNTs film cathode layer 211 are in the vacuum chamber 4. The aluminum film anode conductive layer 11 and the CNTs film cathode layer 211 are arranged opposing each other and the distance therebetween is 200 µm.

The specific preparation method is as follows.
(1) Preparation of the field emission anode plate 1: cutting the Y₂O₃:Eu transparent ceramic base 10 into a 70×50×0.5 mm piece, polishing both the upper and lower surfaces, sonicating the Y₂O₃:Eu transparent ceramic base 10 in sequence with acetone, absolute ethanol and de-ionized water for 20 min, air-drying the washed Y₂O₃:Eu transparent ceramic base 10, and evaporation plating a layer of Al film on a surface of the Y₂O₃:Eu transparent ceramic base 10 as the anode conductive layer 11.
(2) Preparation of the field emission cathode plate 2: cutting the substrate 20 into a 70×60×0.5 mm piece, polishing both the upper and lower surfaces, sonicating in sequence with acetone, absolute ethanol and de-ionized water, air-drying, sputtering an ITO film conductive layer 210 on a surface thereof, and printing a CNTs film cathode layer 211 on the outer surface of the conductive layer 210.
(3) Sealing: connecting two ends of the supporter 3 to the transparent ceramic base 10 outer surface of the field emission anode plate 1 and a surface body 201 of the substrate 20 of the field emission cathode plate 2, so that the supporter 3, the field emission anode plate 1 and the field emission cathode plate 2 form a chamber 4, and the aluminum film anode conductive layer 11 and the CNTs film cathode layer 211 are arranged opposing each other; arranging an exhaust tube on a small hole at a corner of the field emission cathode plate 2, applying a formulated low-melting-point glass solder at the joint of the field emission cathode plate 2, the field emission anode plate 1 and the supporter 3, heating to 380°C and maintaining the temperature for 90 min to seal; after the low-melting-point glass solder is cooled down and solidified, placing a getter in the exhaust port, placing in a exhausting station, exhausting the chamber 4 to 1×10⁻⁵, heating and sealing off to give the red-light-emitting field emission light source.

### Example 2

A green-light-emitting field emission light source has a structure as shown in Figure 3. The field emission light source comprises a field emission anode plate 1, a field emission cathode plate 2 and a supporter 3. The field emission anode plate 1 comprises a Y₂SiO₅:Tb transparent ceramic base 10 having a thickness of 25 mm, on a surface thereof being provided a silver film anode conductive layer 11 having a thickness of 100 µm. The field emission cathode plate 2 comprises a substrate 20 having a thickness of 0.25 mm and a cathode conductive layer 21 provided on a surface body 201 of the substrate 20. The cathode conductive layer 21 comprises a chromium film conductive layer 210 having a thickness of 100 µm and a zinc nanowire film cathode layer 211 having a thickness of 10 µm, which are sequentially provided on the surface body 201. Two ends of the supporter 3 are hermetically connected to the silver film anode conductive layer 11 outer surface of the field emission anode plate 1 and the chromium film conductive layer 210 of the field emission cathode plate 2, respectively, and the supporter 3, the field emission anode plate 1 and the field emission cathode plate 2 form a vacuum chamber 4, wherein the zinc nanowire film cathode layer 211 is in the vacuum chamber 4. The aluminum film anode conductive layer 11 and the CNTs film cathode layer 211 are arranged opposing each other and the distance therebetween is 0.8 cm.

The preparation method is as follows.
(1) Preparation of the field emission anode plate 1: cutting the Y₂SiO₅:Tb transparent ceramic base 10 into a 70×50×25 mm piece, polishing both the upper and lower surfaces, sonicating the Y₂SiO₅:Tb transparent ceramic base 10 in sequence with acetone, absolute ethanol and de-ionized water for 30 min, air-drying the washed Y₂SiO₅:T transparent ceramic base 10, and magnetron sputtering a layer of silver film having a thickness of 100 µm on a surface of the Y₂SiO₅:Tb transparent ceramic base 10 as the anode conductive layer 11.
(2) Preparation of the field emission cathode plate 2: cutting the substrate 20 into a 70×60×25 mm piece, polishing both the upper and lower surfaces, sonicating in sequence with acetone, absolute ethanol and de-ionized water, air-drying, sputtering a chromium film conductive layer 210 having a thickness of 100 µm on a surface thereof, and printing a zinc oxide nanowire film cathode layer 211 having a thickness of 10 µm on the outer surface of the conductive layer 210.
(3) Sealing: connecting two ends of the supporter 3 to the anode conductive layer 11 outer surface of the field emission anode plate 1 and the cathode conductive layer 21 outer surface of the field emission cathode plate 2, and arranging the silver film anode conductive layer 11 and the zinc oxide nanowire film cathode layer 211 opposing each other, so that the supporter 3, the field emission anode plate 1 and the field emission cathode plate 2 form a chamber 4; arranging an exhaust tube in a gap of the supporter 3 between the field emission anode plate 1 and the field emission cathode plate 2, applying a formulated low-melting-point glass solder at the joint of the field emission cathode plate 2, the field emission anode plate 1 and the supporter 3, heating to 450°C and maintaining the temperature for 30 min to seal; after the low-melting-point glass solder is cooled down and solidified, placing a getter in the exhaust port, placing in a exhausting station, exhausting the chamber 4 to 5×10⁻⁵, heating and sealing off to give the red-light-emitting field emission light source.

### Example 3

Preparation of a blue-light-emitting field emission device which has a structure similar to that described in Example 1, except that two ends of the supporter 3 are hermetically connected to the anode conductive layer 11 outer surface of the field emission anode plate 1 and the substrate 20 outer surface of the field emission cathode plate 2, respectively, and the cathode conductive layer 21 is in the vacuum chamber 4. The preparation method is as follows.
(1) Preparation of the field emission anode plate 1: cutting the LaAlO₃:Tm transparent ceramic base 10 into a 70×50×30 mm piece, polishing both the upper and lower surfaces, sonicating the LaAlO₃:Tm transparent ceramic base 10 in sequence with acetone, absolute ethanol and de-ionized water for 30 min, air-drying the washed LaAlO₃:Tm transparent ceramic base 10, and magnetron sputtering a layer of magnesium film a thickness of 300 µm on a surface of the LaAlO₃:Tm transparent ceramic base 10 as the anode conductive layer 11.
(2) Preparation of the field emission cathode plate 2: cutting the substrate 20 into a 70×60×30 mm piece, polishing both the upper and lower surfaces, sonicating in sequence with acetone, absolute ethanol and de-ionized water, air-drying, sputtering an aluminum conductive layer 210 having a thickness of 350 nm on a surface thereof, and printing a cupric oxide nanowire film cathode layer 211 having a thickness of 30 µm on the outer surface of the conductive layer 210.
(3) Sealing: connecting two ends of the supporter 3 to the anode conductive layer 11 outer surface of the field emission anode plate 1 and the cathode conductive layer 21 outer surface of the field emission cathode plate 2, so that the supporter 3 and the field emission anode plate 1 and the field emission cathode plate 2 form a chamber 4; arranging the magnesium film anode conductive layer 11 and the cupric oxide nanowire film cathode layer 211 opposing each other with the distance therebetween being 3 cm; arranging an exhaust tube in a gap of the supporter 3 between the field emission anode plate 1 and the field emission cathode plate 2, applying a formulated low-melting-point glass solder at the joint of the field emission cathode plate 2, the field emission anode plate 1 and the supporter 3, heating to 550°C and maintaining the temperature for 5 min to seal; after the low-melting-point glass solder is cooled down and solidified, placing in a exhausting station, exhausting the chamber 4 to 9.9×10⁻⁵, heating and sealing off to give the red-light-emitting field emission light source.

Described above are only preferred embodiments of the present invention, which are not intended to limit the present invention. All modifications, equivalent substitutions and improvements within the spirit and principle of the present invention shall be within the scope of the present invention.

## Claims

1. A field emission anode plate, comprising a transparent ceramic base and an anode conductive layer provided on a surface of the transparent ceramic base, the transparent ceramic base emitting light under excitation of cathode rays.

2. The field emission anode plate of Claim 1, **characterized in that** a material of the transparent ceramic base is one of Y₂O₃:Eu transparent ceramic, Y₂O₂S:Eu transparent ceramic, Y₂SiO₅:T transparent ceramic, Gd₂O₂S:Tb transparent ceramic, LaAlO₃:Tm transparent ceramic, and LaGaO₃:Tm transparent ceramic.

3. The field emission anode plate of Claim 1 or 2, **characterized in that**:
the transparent ceramic base has a thickness of 0.5-30 mm;
the anode conductive layer has a thickness of 10 nm - 300 µm, and a material of the anode conductive layer is metal aluminum, silver, magnesium, copper or gold.

4. A field emission light source, comprising a field emission anode plate, a field emission cathode plate and a supporter, **characterized in that** the field emission anode plate is a component described in any one of Claims 1-3; the field emission cathode plate comprises a substrate and a cathode conductive layer provided on a surface of the substrate; the anode conductive layer and the cathode conductive layer are arranged opposing each other; two ends of the supporter are hermetically connected to the field emission anode plate and the field emission cathode plate, respectively; and the supporter, the field emission anode plate and the field emission cathode plate form a vacuum chamber.

5. The field emission light source of Claim 4, **characterized in that** a distance between the field emission anode plate and the field emission cathode plate is 200 µm - 3 cm.

6. The field emission light source of Claim 4 or 5, **characterized in that** the substrate comprises a surface body which is arranged opposing the anode conductive layer, and the cathode conductive layer is arranged on a surface of the surface body opposing the anode conductive layer.

7. The field emission light source of Claim 6, **characterized in that**:
the cathode conductive layer comprises a conductive layer provided on the surface body and a cathode layer provided on the outer surface of the conductive layer; the conductive layer is tin indium oxide layer, silver layer, metallic aluminum layer, gold layer or chromium layer; the cathode layer is carbon nanotube layer, zinc oxide nanowire layer or cupric oxide nanowire layer;
the substrate has a thickness of 0.5-30 mm; the conductive layer has a thickness of 100 µm - 250 nm; and the cathode layer has a thickness of 0.5-30 µm.

8. A method for preparing a field emission light source, comprising the steps of:
preparing a field emission anode plate, a field emission cathode plate and an insulating supporter, **characterized in that** the field emission anode plate comprises a transparent ceramic base and an anode conductive layer provided on a surface of the transparent ceramic base, and the transparent ceramic base emits light under excitation of cathode rays; the field emission cathode plate comprises a substrate and a cathode conductive layer provided on a surface of the substrate;
arranging the anode conductive layer of the field emission anode plate and the cathode conductive layer of the field emission cathode plate opposing each other; and connecting two ends of the insulating supporter to the field emission anode plate and the field emission cathode plate, respectively, so that the supporter, the field emission anode plate and the field emission cathode plate form a vacuum chamber; and
arranging an exhaust port at the chamber, applying low-melting-point glass solder at a joint of the insulating supporter, the field emission anode plate and the field emission cathode plate, heating to seal, exhausting the chamber, and sealing the exhausting port to obtain the field emission light source.

9. The method for preparing a field emission light source of Claim 8, **characterized in that** the process for obtaining the anode plate comprises:
providing a transparent ceramic base, washing and drying the transparent ceramic base, and plating a surface of the transparent ceramic base with an anode conductive layer to give the field emission anode plate.

10. The method for preparing a field emission light source of Claim 8, **characterized in that**:
the pressure after exhaustion is 1×10⁻⁵ ∼ 9.9×10⁻⁵¬;
the temperature of heating to seal is 380-550°C, and the time is 5-90 min; and
the anode conductive layer is plated on the surface of the transparent ceramic base by an evaporation method or a magnetron sputtering method.
